# EUROPÄISCHE PATENTSCHRIFT

(11) **EP 3 913 153 B1**
(45) Veröffentlichungstag und Bekanntmachung des Hinweises auf die Patenterteilung: **20.08.2025**
(21) Anmeldenummer: 21172311.9
(22) Anmeldetag: 05.05.2021
(51) Int. Cl.: E03C 1/05, A47J 31/00, A47K 5/12, E03D 5/10

(54) **ARMATUR MIT AUTOMATISCHER OBJEKTERKENNUNG SOWIE VERFAHREN ZUM STEUERN EINER ARMATUR MITTELS AUTOMATISCHER OBJEKTERKENNUNG**
AUTOMATIC OBJECT DETECTION FITTING AND METHOD FOR CONTROLLING A FITTING BY MEANS OF AUTOMATIC OBJECT DETECTION
APPAREIL À RECONNAISSANCE AUTOMATIQUE D'OBJET, AINSI QUE PROCÉDÉ DE COMMANDE D'UN APPAREIL À RECONNAISSANCE AUTOMATIQUE D'OBJET

(30) Priorität: 18.05.2020 CH 6022020
(43) Veröffentlichungstag der Anmeldung: 24.11.2021
(73) Patentinhaber: Viega Technology GmbH & Co. KG, 57439 Attendorn (DE)
(72) Erfinder: KNUPFER, Daniel, 7205 Zizers (CH); CATHOMAS, Patric, 7017 Flims (CH); OBRIST, Roland, 7412 Scharans (CH); TRIET, Philipp, 7310 Bad Ragaz (CH)
(74) Vertreter: Cohausz & Florack

(56) Entgegenhaltungen:
- EP-A1- 2 138 640
- DE-A1- 102019 106 584
- DE-U1- 202017 007 173
- DE-U1- 202019 100 120
- US-A1- 2016 309 967
- US-B1- 9 756 297
- US-B2- 10 450 732

## Beschreibung

### TECHNISCHES GEBIET DER ERFINDUNG

Die vorliegende Erfindung betrifft eine Armatur gemäss dem Oberbegriff von Anspruch 1, insbesondere eine Auslaufarmatur, für eine Sanitärinstallation, eine Armaturenanordnung mit einer erfindungsmässen Armatur sowie ein Verfahren zum Steuern einer erfindungsgemässen Armatur.

### HINTERGRUND DER ERFINDUNG

In der Sanitärtechnik werden zum Verändern und Steuern von Stoffströmen (z.B. Fluiden, d.h. Flüssigkeiten oder Gasen) dienende Bauteile als Armaturen bezeichnet. Sie werden insbesondere an Rohrleitungen und Kesseln verwendet. Sogenannte Auslaufarmaturen sind im Haushalt je nach Anwendung auch als Wasserhahn, Dusch- oder Wanneneinlaufarmatur bekannt. Kombinierte Warm- und Kaltwasser-Auslaufventile werden oft Mischbatterie genannt. Je nach Einsatzort werden Armaturen spezifischer beispielsweise als Küchenarmaturen oder Badarmaturen bezeichnet. Eine Armatur umfasst typischerweise eine Bedieneinheit und/oder eine Steuereinheit und ein mit der Steuereinheit steuerbares Sanitärelement, wie z.B. ein Rohr mit einem Ventil, mit welchem der Durchfluss eines Fluids reguliert wird.

Es ist bekannt Sanitäranlagen mittels elektronischer Steuergeräte zu betreiben. Dabei ist es wünschenswert, dass der jeweilige Benutzer vorbestimmte Funktionen berührungslos auslösen kann. Dazu werden oftmals InfrarotSensoren oder kapazitive Sensoren verwendet, die auf Annäherungen des Benutzers an den Sensor reagieren. Neuerdings sind aber auch sprachgesteuerte Armaturen erhältlich, welche mittels Sprachassistenten wie "Amazon Alexa"^{™}, "Apple Siri"^{™} oder "Google Assistant"^{™} per Sprachbefehl gesteuert werden können. Dadurch hat der Benutzer immer zwei Hände frei und muss keine Bedienelemente anfassen, was praktische und hygienische Vorteile hat. In lärmigen Umgebungen (wie z.B. öffentliche Sanitäranlagen) ist die Spracherkennung aber oftmals beeinträchtigt, sodass die Sprachsteuerung nicht mehr zuverlässig funktioniert. Es besteht zudem das Bedürfnis für eine verbesserte automatische Unterstützung bei der Benutzung von Armaturen in sehr unterschiedlichen Anwendungsbereichen, insbesondere wäre es wünschenswert, wenn die Armatur eine Vielzahl verschiedener vom Benutzer gewünschte Aktionen automatisch erkennen und auslösen bzw. ausführen könnte.

Folgende Dokumente zeigen den Stand der Technik auf. US10450732B2 betrifft ein Flüssigkeitsabgabesystem, welches mit einem Identifikationsgerät einen Benutzer des Systems identifiziert und eine Benutzerkennung generiert. Ein Prozessor reagiert auf die Benutzerkennung, um auf eine Datenbank zuzugreifen, um Benutzerdaten abzurufen, die eine oder mehrere Benutzerpräferenzen angeben, und erzeugt als Reaktion darauf ein Steuersignal. Sensoren erfassen eine Gestenbewegung des Benutzers und als Reaktion darauf wird ein lokales Eingabesignal erzeugt. Ein Aktuatorsystem reagiert auf das Steuersignal und das lokale Eingangssignal, um eine Flüssigkeit mit vordefinierten Eigenschaften aus einem Flüssigkeitsspender abzugeben.

DE202017007173U1 betrifft eine Befülleinrichtung zum Befüllen unterschiedlicher Behälter mit mindestens einer Kamera zum Aufnehmen des aktuell eingesetzten Behälters, einer elektronischen Einheit, welche die Signale der Kamera erhält und in der ein für das Erkennen des aktuell eingesetzten Behälters trainierter Algorithmus vorhanden ist, einer Steuerung, die das Resultat des Algorithmus auswertet und die ihr Verhalten in Abhängigkeit des aktuell eingesetzten Behälters anpasst.

DE202019100120U1 betrifft ein Sanitärobjekt mit einem Wasserauslass, welcher mittels eines Zulaufelements mit einem Wasserreservoir verbindbar ist und zwischen dem Wasserreservoir und dem Wasserauslass ein steuerbares Wasser-Erwärmungselement vorgesehen ist**.** Das Zulaufelement und das Wasser-Erwärmungselement werden durch eine Steuereinrichtung gesteuert, welche einen ersten und einen zweiten Ausgabezustand aufweisendes Mimik-Erkennungsmodul aufweist.

US9756297B1 betrifft eine Kamera zum Betrachten und Erfassen des Gesundheitszustands eines auf einer Toilette sitzenden Benutzers.

DE102019106584A1 betrifft eine Maschine zur Zubereitung von Brühgetränken, die eine Erkennungsvorrichtung für Trinkgefässe aufweist.

US20160309967A1 betrifft ein Spender zum Ausgeben von Seife, Desinfektionsmittel oder Lotion in Abhängigkeit der Handgrösse. Der Spender weist einen Sensor zum Erfassen eines Parameters auf, der die Handgrösse angibt. Der Spender umfasst ausserdem Schaltkreise zum Bestimmen eines abzugebenden Dosisvolumens als Funktion des erfassten Parameters, der eine Handgrösse angibt, sowie Schaltkreise, um zu veranlassen, dass eine Pumpe das Dosisvolumen abgibt.

EP2138640A1 betrifft eine Vorrichtung mit einer Reinigungsvorrichtung zum Reinigen des Intimbereichs eines auf einer Toiletten-Schüssel sitzenden Benutzers, einer Sensoreinrichtung zur Detektion des Ortes bzw. des Verschmutzungszustandes und einer Steuereinrichtung zum Ansteuern der Reinigungseinrichtung nach Massgabe des detektierten Ortes bzw. des detektierten Verschmutzungszustandes.

### ZUSAMMENFASSUNG DER ERFINDUNG

Es ist daher eine Aufgabe der vorliegenden Erfindung eine Armatur für eine Sanitärinstallation bereitzustellen, welche einen Benutzer bei der Benutzung der Armatur automatisch unterstützt, sodass die Armatur insbesondere berührungslos gesteuert werden kann. Eine solche Armatur sollte zudem in vielen unterschiedlichen Anwendungsbereichen eingesetzt werden können. Diese Aufgabe wird erfindungsgemäss durch die in Anspruch 1 festgelegte Armatur gelöst.

Es ist eine weitere Aufgabe der vorliegenden Erfindung eine Armaturenanordnung umfassend eine Sanitärinstallation und eine Armatur anzugeben. Eine solche Armaturenanordnung wird in Anspruch 14 angegeben.

Es ist eine weitere Aufgabe der vorliegenden Erfindung ein Verfahren vorzuschlagen, welches einen Benutzer bei der Benutzung einer Armatur automatisch unterstützt, sodass die Armatur insbesondere berührungslos gesteuert werden kann. Diese Aufgabe wird erfindungsgemäss durch das in Anspruch 16 vorgeschlagene Verfahren gelöst.

Spezifische Ausführungsvarianten der vorliegenden Erfindung werden in den abhängigen Ansprüchen angegeben.

Eine erfindungsgemässe Armatur für eine Sanitärinstallation umfasst eine Steuereinheit und ein mit der Steuereinheit steuerbares Sanitärelement. Zusätzlich weist die Armatur mindestens einen bildgebenden Sensor auf. Die Steuereinheit ist dazu ausgebildet, in Abhängigkeit einer Objekterkennung zum Erkennen von mindestens einem Objekt in der Szene, wie z.B. einer Hand eines Benutzers der Armatur, eines Küchenutensils oder eines Putzutensils, basierend auf mindestens einem Ausgangssignal von dem mindestens einen bildgebenden Sensor eine Aktion des Sanitärelements auszulösen. Die Objekterkennung erfolgt mittels eines neuronalen Netzes, wobei das neuronale Netz ein selbstlernendes neuronales Netz ist. Die Armatur ist dazu ausgebildet, eine Rückmeldung des Benutzers an die Steuereinheit entgegenzunehmen, mit welcher der Benutzer angibt, ob die von der Steuereinheit ausgelöste Aktion korrekt war oder nicht. Der bildgebende Sensor dient dazu, eine Szenerie in einem Raumbereich der Armatur zu erfassen, z.B. in einem Auslaufbereich der Armatur.

Die Armatur kann beispielsweise ein Wasserhahn, eine Dusch- oder Wanneneinlaufarmatur, aber auch Teil (z.B. ein Auslauf) eines Seifen-, Lotions- oder Desinfektionsmittelspenders, oder auch ein Teil (z.B. eine Luftdüse) eines Hände- oder Haartrockners sein.

In einer Ausführungsvariante der Armatur ist der mindestens eine bildgebende Sensor eine 2D- oder 3D-/Stereo-(optische) Kamera (für den sichtbaren Lichtbereich), eine Wärmebildkamera (für den Infrarot-/IR-Lichtbereich), ein Ultraschallsensor, ein Radarsensor oder ein Laserdistanzmesssensor, insbesondere ein LIDAR- (= light detection and ranging) oder ToF- (= time of flight) Sensor oder ein Laserscanner, oder eine Kombination der genannten Sensortypen. Falls nur ein Sensor(-element) eingesetzt wird, um eine Szenerie in einem Raumbereich der Armatur zu erfassen, so ist dieser besonders dazu ausgelegt den Raumbereich sukzessive (und periodisch) abzutasten (d.h. räumlich zu scannen), z.B. indem die Richtung, in welche ein Sensorsignal aufgenommen wird, über die Zeit verändert wird, um dadurch ein zwei- (oder drei-) dimensionales Bild des Raumbereichs zu erfassen (bestehend aus mehreren Pixeln oder Voxeln). Es kann z.B. auch eine Kombination von einer optischen 2D-Kamera und eines (in unterschiedliche Raumrichtungen ausrichtbaren) ToF-Sensors zur zusätzlichen Distanzmessung verwendet werden, insbesondere kann auch eine Vielzahl von ToF-Sensoren eingesetzt werden, um mehrere Distanzen in unterschiedlichen Richtungen gleichzeitig zu bestimmen.

Die Armatur kann z.B. zusätzlich eine Beleuchtungseinheit zur Ausleuchtung von Objekten umfassen, wobei die Beleuchtungseinheit insbesondere eine oder mehrere LEDs (light emitting diodes) oder Laserdioden oder eine Ultraviolett-/UV- oder Infrarot-/IR-Lichtquelle umfasst.

In einer weiteren Ausführungsvariante weist die Armatur zusätzlich eine Bildverarbeitungseinheit auf, um die Objekterkennung durchzuführen. Die Bildverarbeitungseinheit kann beispielsweise einen Mikroprozessor/-controller (MPU/MCU) oder Signalprozessor (DSP) umfassen, wobei diese programmierbar sind.

Alternativ (oder zusätzlich) kann die Bildverarbeitungseinheit auch eine applikations-spezifische Hardware, wie z.B. ein ASIC oder FGPA (field-programmable gate array), umfassen. Die Bildverarbeitungseinheit kann auch als Teil der Steuereinheit implementiert sein. Die Bildverarbeitungseinheit und/oder die Steuereinheit können allgemein als Prozessor (bzw. als Prozessoren) der Armatur bezeichnet werden.

In einer weiteren Ausführungsvariante weist die Armatur zusätzlich eine Kommunikationseinheit auf, um das mindestens eine Ausgangssignal von dem mindestens einen bildgebenden Sensor an eine entfernte Bildverarbeitungseinheit, z.B. ein Server, insbesondere in der Cloud, zur Objekterkennung zu senden und um ein Ergebnis der Objekterkennung zu empfangen.

In einer weiteren Ausführungsvariante der Armatur wurde das neuronale Netz/Netzwerk vor Inbetriebnahme (z.B. durch den Hersteller) der Armatur trainiert.

In einer weiteren Ausführungsvariante der Armatur ist ein sogenanntes "reinforced learning" (bestärkendes Lernen) ausführbar für das selbstlernende neuronale Netz/Netzwerk. Für das selbstlernende neuronale Netz/Netzwerk gibt der Benutzer eine Rückmeldung an die Steuereinheit oder die Bildverarbeitungseinheit oder die Einheit, welche die Objekterkennung ausführt, mit welcher der Benutzer angibt, ob die von der Steuereinheit ausgelöste Aktion korrekt war oder nicht. In einer Ausführungsvariante wird die Rückmeldung des Benutzers von dem bildgebenden Sensor aufgenommen, wobei die Rückmeldung des Benutzers insbesondere darin besteht, dass der Benutzer den bildgebenden Sensor für kurze Zeit mit der Hand abdeckt, wenn die ausgelöste Aktion falsch war.

In einer weiteren Ausführungsvariante weist die Armatur zusätzlich ein Mikrofon auf, mit welchem der Benutzer insbesondere eine Rückmeldung an die Steuereinheit geben kann, wobei die Steuereinheit insbesondere dazu ausgeführt ist, basierend auf einem Ausgangssignal des Mikrofons Klatsch- und/oder Pfeifgeräusche zu erkennen.

In einer weiteren Ausführungsvariante der Armatur ist die Bildverarbeitungseinheit dazu ausgebildet, als Teil der Objekterkennung eine Objektklassifikation durchzuführen, um das Objekt zu einer bestimmten Klasse aus einer Vielzahl von vordefinierten Klassen zuzuordnen. Dabei umfasst jede Objektklasse eine bestimmte Art von Objekten.

In einer weiteren Ausführungsvariante der Armatur können mittels der Objektklassifikation verschiedene Klassen von Küchenutensilien, wie z.B. Teller, Gläser, Tassen, Besteck, Kochtöpfe, Pfannen, etc., oder von Gliedmassen, wie z.B. Hände (auch einzelne Finger), Arme, Füsse oder Beine, des Benutzers der Armatur oder von Putzutensilien, wie z.B. eine Putzbürste, einen Putzschwamm, Stahlwolle oder ein Putzlappen, erkannt werden.

In einer weiteren Ausführungsvariante der Armatur ist die Bildverarbeitungseinheit dazu ausgebildet, mindestens eine Eigenschaft des Objekts, wie z.B. Transparenz, Farbe, Grösse oder Verschmutzungsgrad, zu bestimmen.

In einer weiteren Ausführungsvariante der Armatur ist die Bildverarbeitungseinheit dazu ausgebildet, eine Position, insbesondere relativ zu einer Referenzposition, und/oder eine Bewegung des Objekts zu bestimmen.

In einer weiteren Ausführungsvariante der Armatur ist die Steuereinheit dazu ausgebildet, in Abhängigkeit der Objektklassifikation und/oder der Eigenschaft des Objekts und/oder der Position des Objekts und/oder der Bewegung des Objekts eine bestimmte Aktion des Sanitärelements auszulösen.

In einer weiteren Ausführungsvariante der Armatur sind eine oder mehrere der folgenden Aktionen auslösbar:
- Auswählen einer Voreinstellung des Sanitärelements und Ausführen eines gemäss der Voreinstellung definierten Verhaltens des Sanitärelements;
- Abgeben einer bestimmten Menge eines Fluids;
- Abgeben einer bestimmten Menge eines Fluids pro Zeiteinheit;
- Abgeben eines Fluids mit einer voreingestellten maximalen, minimalen oder bevorzugten Temperatur des abzugebenden Fluids;
- Abgeben eines bestimmten Fluids aus einer Vielzahl (d.h. zwei oder mehr) verschiedener Fluide, insbesondere in Abhängigkeit einer Position des Objekts, wie z.B. einer Hand des Benutzers;
- Ein- und/oder Ausschalten der Abgabe eines Fluids.

Unter Fluiden werden Gase (z.B. Luft oder Ozon), Flüssigkeiten (z.B. Wasser oder Desinfektionsmittel) und/oder Gas-/Flüssigkeitsgemische (Sprudelwasser) verstanden. Anstatt Fluiden kann die Armatur auch für die Abgabe von feinkörnigen Feststoffen (wie z.B. Pulver oder Sand) ausgeführt sein. Im Zusammenhang mit der vorliegenden Erfindung können Flüssigkeiten aber auch dickflüssige Substanzen wie Seifen, Lotionen, Cremes und Pasten umfassen.

Gemäss einem weiteren Aspekt der vorliegenden Erfindung umfasst eine Armaturenanordnung eine Sanitärinstallation und eine Armatur gemäss einer der oben aufgeführten Ausführungsformen, wobei der (mindestens eine) bildgebende Sensor derart angeordnet ist, dass ein Einlassbereich, insbesondere zum Abgeben eines Fluids, und/oder ein Auslaufbereich, insbesondere zum Wegführen des abgegebenen Fluids, der Armatur durch den (mindestens einen) bildgebenden Sensor erfassbar ist/sind.

In einer Ausführungsvariante der Armaturenanordnung ist die Sanitärinstallation ein Waschbecken oder -trog, ein Bidet, eine Dusche, eine Badewanne, ein Seifenspender, ein Lotionsspender, ein Desinfektionsmittelspender, ein Händetrockner, ein Haartrockner, eine Toilette, ein Dusch-WC, ein Urinal, ein Getränkeautomat oder eine Waschanlage.

Gemäss einem weiteren Aspekt der vorliegenden Erfindung umfasst ein Verfahren zum Auslösen einer Aktion eines Sanitärelements einer Armatur gemäss einer der oben aufgeführten Ausführungsformen folgende Schritte:
- Erfassen einer Szene beim Sanitärelement mit mindestens einem bildgebenden Sensor, insbesondere in einem Einlassbereich und/oder einem Auslaufbereich der Armatur, wobei die Szene mittels eines oder mehrerer Bilder als Ausgabe des mindestens einen bildgebenden Sensors erfasst wird, wobei insbesondere im Fall mehrerer Bilder diese zeitlich gestaffelt, z.B. als Film bzw. Video, oder (zeitgleich) aus verschiedenen Blickwinkeln aufgenommen werden;
- Durchführen einer Objekterkennung zum Erkennen von mindestens einem Objekt in der Szene, wie z.B. einer Hand eines Benutzers der Armatur, eines Küchenutensils oder eines Putzutensils; und
- Auslösen einer Aktion des Sanitärelements in Abhängigkeit der Objekterkennung,
wobei die Objekterkennung mittels eines neuronalen Netzes erfolgt, das neuronale Netz ein selbstlernendes neuronales Netz ist und der Benutzer eine Rückmeldung gibt, ob die ausgelöste Aktion korrekt war oder nicht.

Beim Verfahren kann z.B. die Szene mittels einer Beleuchtungseinheit, insbesondere eine oder mehrere LEDs oder Laserdioden oder eine UV- oder IR-Lichtquelle, ausgeleuchtet werden.

Beim Verfahren kann z.B. die mit dem mindestens einen bildgebenden Sensor erfasste Szene als Ausgabe des mindestens einen bildgebenden Sensors an eine entfernte Bildverarbeitungseinheit, z.B. ein Server, insbesondere in der Cloud (d.h. IT-Infrastruktur, die beispielsweise über das Internet verfügbar gemacht wird), zur Objekterkennung gesendet, und ein Ergebnis der Objekterkennung von der entfernten Bildverarbeitungseinheit empfangen werden.

Beim Verfahren kann z.B. die Objekterkennung mittels eines neuronalen Netzes/Netzwerks ausgeführt werden, insbesondere mittels eines vor Inbetriebnahme der Armatur (z.B. durch den Hersteller) trainierten neuronalen Netzes/Netzwerks.

Beim Verfahren kann z.B. als Teil der Objekterkennung eine Objektklassifikation durchgeführt werden, um ein Objekt zu einer bestimmten Klasse aus einer Vielzahl von vordefinierten Klassen zuzuordnen.

Beim Verfahren können z.B. mittels der Objektklassifikation verschiedene Klassen von Küchenutensilien, wie z.B. Teller, Gläser, Tassen, Besteck, Kochtöpfe, Pfannen, etc., oder von Gliedmassen, wie z.B. Hände (auch einzelne Finger), Arm, Füsse und Beine, eines Benutzers der Armatur oder von Putzutensilien, wie z.B. eine Putzbürste, einen Putzschwamm, Stahlwolle oder ein Putzlappen, erkannt werden.

Beim Verfahren kann z.B. mindestens eine Eigenschaft eines Objekts, wie z.B. Transparenz, Farbe, Grösse oder Verschmutzungsgrad, bestimmt werden.

Verfahren kann z.B. eine Position, insbesondere relativ zu einer Referenzposition, und/oder eine Bewegung eines Objekts bestimmt werden.

Beim Verfahren kann z.B. in Abhängigkeit der Objektklassifikation und/oder der Eigenschaft des Objekts und/oder der Position des Objekts und/oder der Bewegung des Objekts eine bestimmte Aktion des Sanitärelements ausgelöst werden.

Beim Verfahren kann die Aktion z.B. mindestens eines der folgenden umfassen:
- Auswählen einer Voreinstellung des Sanitärelements und Ausführen eines gemäss der Voreinstellung definierten Verhaltens des Sanitärelements;
- Abgeben einer bestimmten Menge eines Fluids;
- Abgeben einer bestimmten Menge eines Fluids pro Zeiteinheit;
- Abgeben eines Fluids mit einer voreingestellten maximalen, minimalen oder bevorzugten Temperatur des abzugebenden Fluids;
- Abgeben eines bestimmten Fluids aus einer Vielzahl (d.h. zwei oder mehr) verschiedener Fluide, insbesondere in Abhängigkeit einer Position des Objekts, wie z.B. einer Hand des Benutzers;
- Ein- und/oder Ausschalten der Abgabe eines Fluids.

In einer Ausführungsvariante umfasst das Verfahren zusätzlich mindestens einer der folgenden Schritte:
- Aufnehmen mit dem (mindestens einen) bildgebenden Sensor oder einer separaten (von der Armatur unabhängigen) Kamera, z.B. einer Kamera eines Smartphones, von Bildern (oder Film bzw. Videos) eines neuen, d.h. bisher unbekannten Objekts;
- Übermitteln von Trainings-Daten, z.B. die zuvor aufgenommenen Bilder (oder Film bzw. Video) eines neuen, d.h. bisher unbekannten Objekts, an einen (entfernten) Server, optional mit einer Angabe betreffend die (Objekt-) Klasse, welcher die Trainings-Daten zugeordnet sind;
- Verarbeiten von Trainings-Daten um ein trainiertes neuronales Netz/Netzwerk zu erstellen, z.B. in Form eines TensorFlow Lite Modells;
- Übermitteln eines trainierten neuronalen Netzes/ Netzwerks, z.B. in Form eines TensorFlow Lite Modells, von dem (entfernten) Server and die Armatur;
- Zuordnen von einem bestimmten Objekt (oder einer Geste betreffend dieses Objekt) zu einer bestimmten Aktion für die Steuereinheit, insbesondere durch den Benutzer, beispielsweise mittels einer Web-App oder einer Mobile App (Anwendungssoftware für Mobilgeräte) auf einem Smartphone.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: eine schematische Darstellung eines ersten Ausführungsbeispiels einer erfindungsgemässen Armatur für eine Sanitärinstallation;
- Fig. 2a): eine Darstellung in einer Seitenansicht eines zweiten Ausführungsbeispiels einer erfindungsgemässen Armatur für eine Sanitärinstallation, wie z.B. ein Wasch- oder Spülbecken;
- b): eine Darstellung in einer Ansicht von unten des zweiten Ausführungsbeispiels;
- Fig. 3: eine schematische Darstellung eines dritten Ausführungsbeispiels einer erfindungsgemässen Armatur für eine Sanitärinstallation, wie z.B. ein Waschbecken in einem Badezimmer oder öffentlichen Waschraum;
- Fig. 4: eine schematische Darstellung eines vierten Ausführungsbeispiels einer erfindungsgemässen Armatur für eine Sanitärinstallation, wie z.B. ein Waschbecken in einem Badezimmer oder öffentlichen Waschraum;
- Fig. 5: eine Darstellung des zweiten Ausführungsbeispiels, welche einen Anwendungsfall für das Händewaschen illustriert;
- Fig. 6: eine Darstellung des zweiten Ausführungsbeispiels, welche einen Anwendungsfall für das Abwaschen von schmutzigem Geschirr illustriert;
- Fig. 7: eine Darstellung des zweiten Ausführungsbeispiels, welche einen Anwendungsfall für das Auffüllen einer Teetasse mit heissem Wasser illustriert;
- Fig. 8: eine Darstellung des zweiten Ausführungsbeispiels, welche einen Anwendungsfall für das Auffüllen eines Messbechers mit kaltem Wasser illustriert;
- Fig. 9: eine schematische Darstellung eines fünften Ausführungsbeispiels einer erfindungsgemässen Armatur für eine Sanitärinstallation, wie z.B. eine Dusche in einem Badezimmer oder öffentlichen Duschraum; und
- Fig. 10: eine schematische Darstellung eines sechsten Ausführungsbeispiels einer erfindungsgemässen Armatur für eine Sanitärinstallation mit zwei Auslässen für zwei verschiedene Flüssigkeiten.

In den Figuren stehen gleiche Referenzzeichen für gleiche Elemente.

### DETAILLIERTE BESCHREIBUNG DER ERFINDUNG

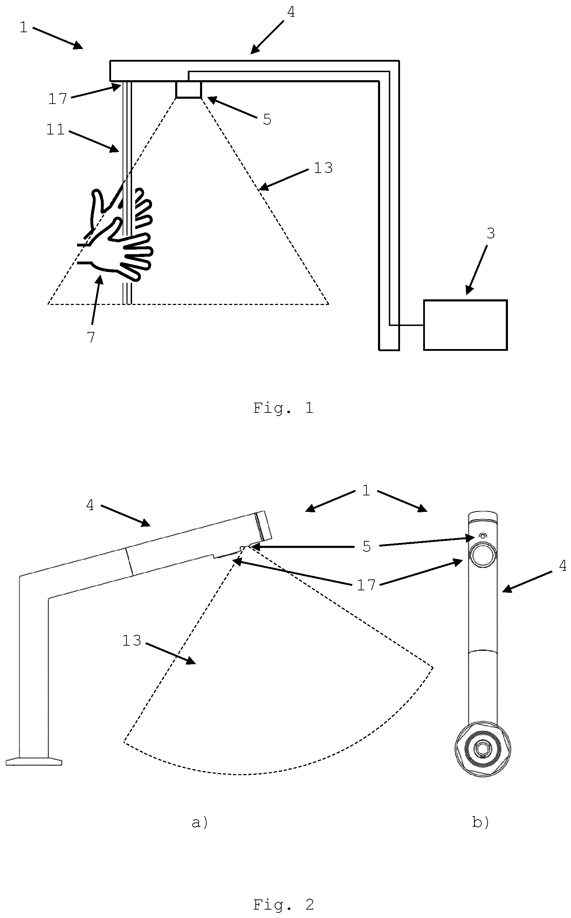

Um das grundlegende Prinzip der vorliegenden Erfindung zu erklären, zeigt Fig. 1 in einer schematischen Darstellung ein erstes einfaches Ausführungsbeispiel einer erfindungsgemässen Armatur 1 für eine Sanitärinstallation, wie z.B. ein Waschbecken für ein Badezimmer oder ein Spülbecken für eine Küche. Die Armatur 1 ist im vorliegenden Fall beispielhaft eine Auslaufarmatur (auch Wasserhahn genannt). Die Armatur 1 umfasst ein Sanitärelement 4 in Form eines Rohrs mit einem Auslass 17 für eine Flüssigkeit 11, z.B. Wasser. Die Durchflussmenge der Flüssigkeit 11, welche aus dem Auslass 17 austritt, wird durch ein Ventil (in Fig. 1 nicht gezeigt) reguliert. Das Ventil wiederum wird durch eine Steuereinheit 3 eingestellt. Normalerweise erfolgt die Steuerung des Ventils über ein manuelles Bedienelement, welches von einem Benutzer betätigt werden muss. Alternativ wird das Ventil automatisch ausgelöst, beispielsweise mittels eines Annäherungssensors, wie z.B. ein Infrarot-/IR-Sensor. Gemäss der vorliegenden Erfindung wird nun ein bildgebender Sensor 5, wie z.B. eine Kamera, eingesetzt, um das Ventil via die Steuereinheit 3 auszulösen. Dazu wird das Ausgangssignal des bildgebenden Sensors 5, z.B. ein (oder mehrere) 2D-Bild(er) oder ein Film bzw. Video (d.h. eine zeitliche Abfolge von Bildern) analysiert und eine Objekterkennung durchgeführt, beispielsweise um das Vorhandensein von Händen 7 unter dem Auslass 17 zu detektieren. Je nach Ergebnis der Objekterkennung wird das Ventil via die Steuereinheit 3 geöffnet, damit der Benutzer die Hände 7 waschen kann. Sobald der Benutzer die Hände 7 aus dem Einlassbereich 13, welcher vom bildgebenden Sensor 5 erfasst und überwacht wird, entfernt, wird dies von der Objekterkennung detektiert und das Ventil wird via die Steuereinheit 3 wieder geschlossen, sodass keine Flüssigkeit 11 mehr aus dem Auslass 17 austritt.

Der Vorteil der Objekterkennung liegt nun darin, dass je nach erkanntem Objekt und dessen Bewegung(en) unterschiedliche Aktionen ausgeführt werden können. So kann z.B. die Durchlaufmenge des Wassers in Abhängigkeit von der Distanz des Objekts 7 (z.B. der Hände) von dem bildgebenden Sensor 5 gesteuert werden - z.B. je weiter die Hände von der Kamera 5 entfernt sind, desto mehr Wasser wird pro Zeiteinheit ausgegeben. Zudem kann beispielsweise bei einer Mischbatterie, d.h. einem kombinierten Warm- und Kaltwasser-Auslaufventil, die Wassertemperatur z.B. in Abhängigkeit einer Bewegung des Objekts 7 eingestellt werden - z.B. führt eine Bewegung/Verschiebung der Hände 7 nach rechts zu kälterem Wasser und eine Bewegung/ Verschiebung der Hände 7 nach links zu wärmerem Wasser.

In Fig. 2 wird a) in einer Seitenansicht und b) in einer Ansicht von unten ein zweites Ausführungsbeispiel einer erfindungsgemässen Armatur 1 für eine Sanitärinstallation, wie z.B. ein Wasch- oder Spülbecken dargestellt. Wie im Beispiel gemäss Fig. 1 ist auch hier der bildgebende Sensor 5 (z.B. Kamera) am Auslaufrohr nahe dem Auslass 17 des Sanitärelements 4 angeordnet - in Fig. 2 oberhalb des Auslasses 17 und in Fig. 1 unterhalb des Auslasses 17, sodass der Einlassbereich 13 durch den bildgebenden Sensor 5 (z.B. Kamera) vollständig erfasst werden kann.

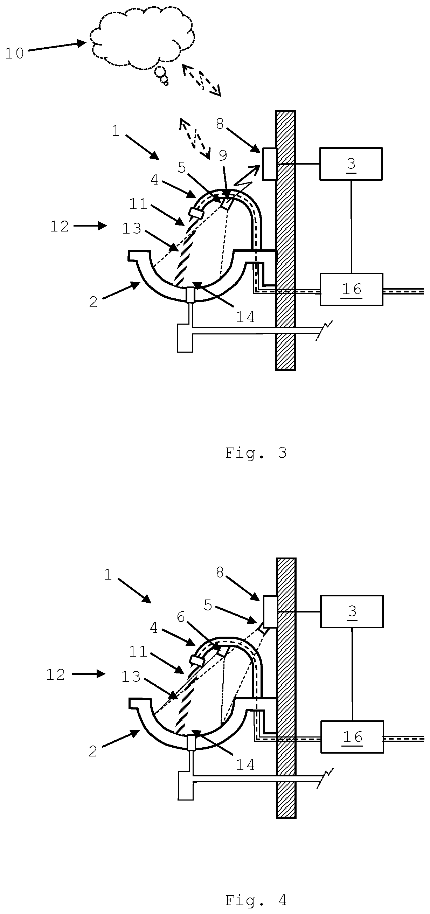

Fig. 3 zeigt in einer schematischen Darstellung ein drittes Ausführungsbeispiel einer erfindungsgemässen Armatur 1 für eine Sanitärinstallation, wie z.B. ein Waschbecken 2 in einem Badezimmer. Das von dem bildgebenden Sensor 5 (z.B. Kamera) aufgenommene Signal (z.B. Bild oder Film bzw. Video) wird zur Objekterkennung an eine Bildverarbeitungseinheit 8 übermittelt. Die Bildverarbeitungseinheit 8 kann direkt beim bildgebenden Sensor 5 angeordnet sein (z.B. in einem gemeinsamen Elektronikmodul) oder es kann eine separate Einheit sein, die z.B. von dem Auslaufrohr abgesetzt angeordnet ist. Die Signal-/Datenübertragung zwischen dem bildgebenden Sensor 5 (z.B. Kamera) und der Bildverarbeitungseinheit 8 kann via Kabel oder drahtlos (in Fig. 3 als "Funkblitz" dargestellt) erfolgen. Die Bildverarbeitungseinheit 8 kann beispielsweise bei der Steuerung 3 angeordnet sein (z.B. in einem gemeinsamen Elektronikmodul oder beides wird durch einen gemeinsamen Prozessor realisiert). Alternativ kann die Objekterkennung aber z.B. auch in einem weit entfernten Server, wie einem Cloud-Server 10, durchgeführt werden. Die Verbindung dorthin kann teils drahtlos (z.B. via IR, Bluetooth, WLAN, Mobilfunk) oder auch drahtgebunden (z.B. via Controller Area Network (CAN) bus, Ethernet), insbesondere via Internet, erfolgen. Um eine drahtlose Anbindung des bildgebenden Sensors 5 (z.B. Kamera) zu ermöglichen, umfasst die Armatur 1 zusätzlich eine drahtlose Kommunikationseinheit 9 (Sender-/ Empfänger, Transceiver).

Fig. 3 zeigt in einer schematischen Darstellung ein viertes Ausführungsbeispiel einer erfindungsgemässen Armatur 1 für eine Sanitärinstallation, wie z.B. ein Waschbecken 2 in einem Badezimmer. Im Vergleich zum dritten Ausführungsbeispiel gemäss Fig. 3 ist hier der bildgebende Sensor 5 (z.B. Kamera) nicht am Auslaufrohr 4 angeordnet, sondern an eine Wand montiert und in Richtung des Einlassbereichs 13 (sowie des Auslaufbereichs 14) ausgerichtet. Zusätzlich umfasst die Armatur 1 eine Beleuchtungseinheit 6, welche am Auslaufrohr 4 angeordnet ist. Diese dient dazu den Einlassbereich 13 (sowie den Auslaufbereich 14) auszuleuchten, damit der bildgebende Sensor 5 ein möglichst kontrastreiches Bild aufnehmen kann, was die Objekterkennung erleichtert. Das Licht, welches die Beleuchtungseinheit 6 abgibt, ist an den Detektionsbereich des bildgebenden Sensors 5 angepasst. Die Beleuchtungseinheit 6 kann aber auch als Arbeitsbeleuchtung für den Benutzer dienen sowie beispielsweise auch als Anzeige/Indikator - z.B. rotes Licht bedeutet heisses Wasser und blaues Licht kaltes Wasser, und ein blinkendes Licht zeigt eine Störung an.

Als Teil der Objekterkennung wird beispielsweise eine Objektklassifikation durchgeführt, um ein Objekt zu einer bestimmten Klasse aus einer Vielzahl von vordefinierten Klassen zuzuordnen. Dabei umfasst jede Objektklasse eine bestimmte Art von Objekten, wie z.B. Küchenutensilien (z.B. Teller, Gläser, Tassen, Besteck, Kochtöpfe, Pfannen, etc.) oder Gliedmassen (z.B. Hände, Finger, Arme, Füsse oder Beine) eines Benutzers der Armatur oder Putzutensilien (z.B. Putzbürste, Putzschwamm, Stahlwolle oder Putzlappen).

Je nach erkanntem Objekt können dann verschiedene Aktionen des Sanitärelements ausgelöst werden. D.h. jedem Objekt (bzw. jeder Art von Objekten) ist eine bestimmte Aktion zugeordnet.

Die Objekterkennung wird mittels eines selbstlernenden neuronalen Netzes bzw. Netzwerks ausgeführt.

Das neuronale Netzwerk wurde vorzugsweise vor Inbetriebnahme der Armatur (z.B. vom Hersteller der Armatur) trainiert. D.h. die Einstellungen des neuronalen Netzwerks wurden z.B. mit Hilfe von Trainings-Daten bestimmt. Die Trainings-Daten zum Trainieren des neuronalen Netzwerks bestehen aus Ausgangssignalen/-daten des bildgebenden Sensors 5 sowie jeweils aus einer Zuordnung zu einen bestimmten (bekannten) Objekt (im Fachbereich des maschinellen Lernens "data labeling" genannt). Das Trainieren des neuronalen Netzwerks erfolgt wie erwähnt offline und wird typischerweise mit Hilfe von leistungsstarken Rechnern (z.B. in der Cloud) und spezialisierten Software-Tools ausgeführt. Eine lokale Objekterkennung (z.B. durch "Inference" mittels des neuronalen Netzwerks) bei der Armatur hat den Vorteil, dass die aufgenommenen Bilder nicht an einen externen Server übermittelt werden müssen, was insbesondere aus Datenschutzgründen sowie zur Wahrung der Privatsphäre bevorzugt wird. Es ist denkbar, dass der Benutzer Trainingsdaten für neu zu erkennende Objekte mittels des bildgebenden Sensors aufnimmt und diese an einen (automatischen) Dienst übermittelt, welcher dem Benutzer neue Einstellungen (z.B. in Form eines "TensorFlow Lite" Modells) für das neuronale Netzwerk oder eine neue Firmware für die Objekterkennung bzw. -klassifikation zurückschickt.

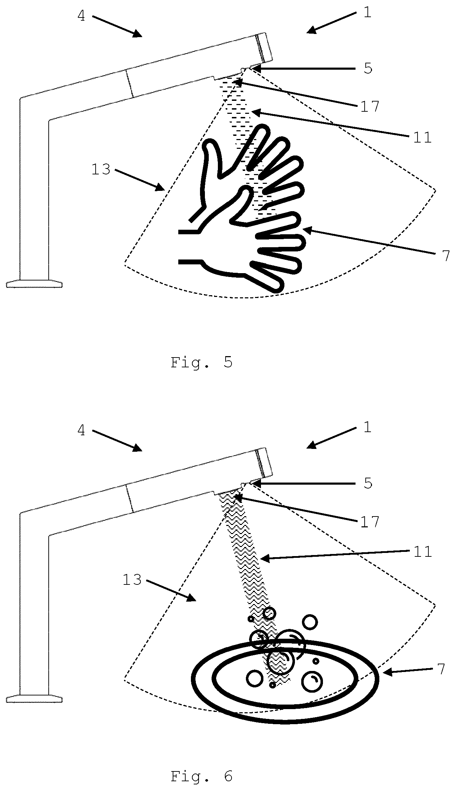

Die Figuren 5 bis 8 zeigen nun, wie mit Hilfe der erfindungsgemässen Armatur entsprechend der Ausführungsvariante gemäss Fig. 2 verschiedene Objekte erkannt werden können, die dann zu entsprechend zugeordneten Aktionen des Sanitärelements führen.

In Fig. 5 hält ein Benutzer seine Hände 7 unter den Wasserhahn 4. Sobald die Kamera 5 die Hände 7 im Einlassbereich 13 erkennt, wird das Wasser 11 eingeschaltet. Wenn der Benutzer seine Hände 7 aus dem Einlassbereich 13 entfernt, wird das Wasser 11 wieder abgestellt. Durch Handbewegungen (z.B. bestimmte Gesten) können zudem verschiedene zusätzliche Aktionen ausgelöst werden, wie z.B. Wasser wärmer/kälter einstellen, Stärke der Wasserabgabe erhöhen/reduzieren, Brause/Dusche zu-/ wegschalten. Bei der Gesten-Auswertung werden insbesondere bestimmte Bewegungsmuster (Richtung/Geschwindigkeit) erkannt. So kann etwa das Aufmachen der Hand/Hände (von Faust zu ausgestreckten Fingern) die Aktion Dispensieren einer Portion Seife oder Desinfektionsmittel auslösen.

In Fig. 6 hält ein Benutzer einen verschmutzten Teller 7 unter den Wasserhahn 4. Sobald die Kamera 5 den verschmutzten Teller 7 im Einlassbereich 13 erkennt, wird (anstatt kaltes) warmes/heisses Wasser 11 eingeschaltet. Zusätzlich kann dem Wasser 11 noch Spülmittel beigefügt werden - besonders dann, wenn der Teller 7 als (stark) verschmutzt erkannt wird, denn die Objekterkennung erlaubt es auch Eigenschaften eines Objekts, wie z.B. der Verschmutzungsgrad, zu bestimmen. Auch hier wird das Wasser 11 wieder ausgeschaltet, sobald der Benutzer den (nun sauberen) Teller 7 wieder aus dem Einlassbereich 13 entfernt.

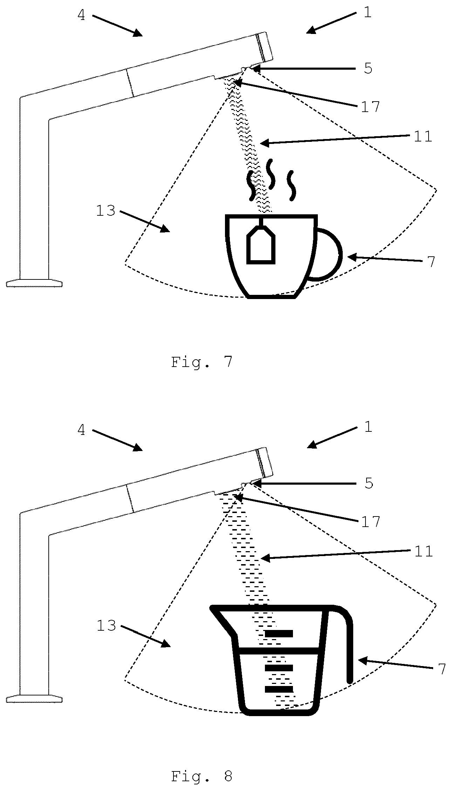

In Fig. 7 hält ein Benutzer eine Teetasse 7 unter den Wasserhahn 4. Sobald die Kamera 5 die Teetasse 7 im Einlassbereich 13 erkennt, wird heisses/kochendes Wasser 11 eingeschaltet. Durch die Objekterkennung ist es auch möglich Eigenschaften des Objekts, wie z.B. dessen Transparenz, Farbe und/oder Grösse, zu bestimmen. Damit kann einerseits zwischen verschieden grossen, verschieden farbigen Tassen z.B. aus Glas oder Keramik unterschieden werden, sodass auch die entsprechende Menge an heissem/kochendem Wasser eingefüllt wird. Das Einfüllen kann auch dadurch abgebrochen werden, indem die Tasse 7 vom Wasserstrahl weggezogen wird. Sobald die Armatur 1 registriert, dass der Abstand zwischen Wasserstrahl und Tassenrand sich verändert oder dieser Abstand einen gewissen Wert unterschreitet, wird das Wasser 11 automatisch abgeschaltet. Aus Sicherheitsgründen kann das kochende Wasser 11 auch sofort abgeschaltet werden, sobald eine Hand des Benutzers im Einlassbereich 13 detektiert wird (-> Notabschaltung Sicherheitsfunktion).

In Fig. 8 hält ein Benutzer einen Messbecher 7 unter den Wasserhahn 4. Sobald die Kamera 5 den Messbecher 7 im Einlassbereich 13 erkennt, wird kaltes Wasser 11 eingeschaltet. Zusätzlich kann der Benutzer durch Hinhalten seiner Hand mit z.B. 1 bis 4 ausgestreckten Fingern angeben, wieviel der Messbecher 7 mit Wasser 11 vollgefüllt werden soll (z.B. zu einem Viertel, zur Hälfte, zu drei Vierteln oder ganz voll). Hält der Benutzer stattdessen einen Kochtopf mit beiden Händen unter den Wasserhahn 4 in den Einlassbereich 13, so wird dieser solange mit Wasser 11 aufgefüllt, bis der Kochtopf wieder vom Wasserstrahl weggezogen wird.

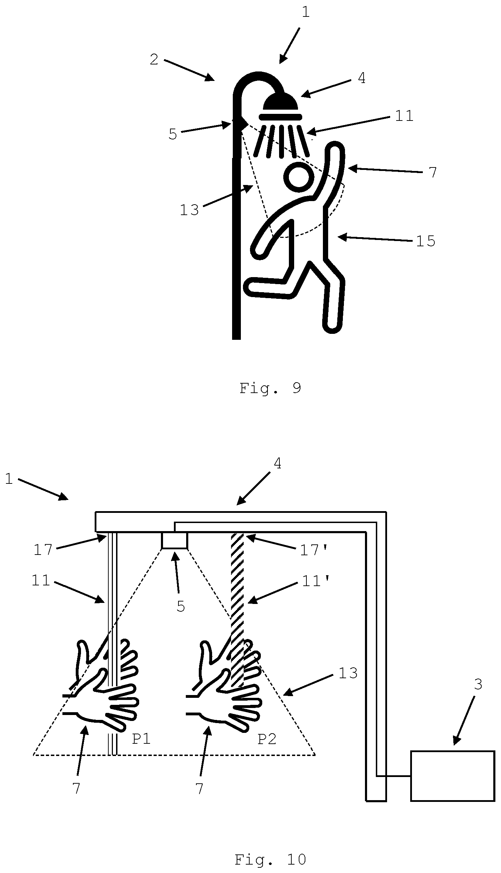

Fig. 9 zeigt eine Anwendung der erfindungsgemässen Armatur 1 in einer Dusche 2. Sobald die Kamera 5 eine Person 15 oder insbesondere deren Kopf oder Oberkörper 7 unter der Dusche im Einlassbereich 13 erkennt, wird Wasser 11 laufengelassen. Die Temperatur sowie die Stärke des Wasserstrahls kann die Person 15 beispielsweisen durch Handgesten verstellen. Auch ist es möglich die Position (z.B. Höhe über dem Kopf) und/oder die Ausrichtung des Duschkopfes auf die Person anzupassen und sie allenfalls auch zu verfolgen.

Analog zu den Ausführungen für die Anwendung für eine Dusche kann die erfindungsgemässe Armatur auch für ein an einer Wand montierten Hände- oder Haartrockner eingesetzt werden, wobei der Luftstrom in Abhängigkeit der Objekterkennung an- und ausgeschaltet sowie die Temperatur und Stärke (wie auch Richtung) reguliert werden kann.

Fig. 10 zeigt eine schematische Darstellung eines sechsten Ausführungsbeispiels einer erfindungsgemässen Armatur 1 für eine Sanitärinstallation. In Erweiterung des ersten Ausführungsbeispiels gemäss Fig. 1 weist diese Variante zwei Flüssigkeitsauslässe 17, 17' für zwei verschiedene Flüssigkeiten 11, 11' auf, wobei die erste Flüssigkeit 11 z.B. Wasser und die zweite Flüssigkeit 11' z.B. Seife oder ein (alkoholisches) Händedesinfektionsmittel sein kann. Wenn der Benutzer die Hände 7 im Einlassbereich 13, welcher vom bildgebenden Sensor 5 erfasst und überwacht wird, unter den ersten Auslass 17 an der Position P1 hält, wird dies von der Objekterkennung detektiert und das Ventil für die erste Flüssigkeit 11 wird via die Steuereinheit 3 geöffnet, sodass z.B. Wasser 11 fliesst, um die Hände 7 zu waschen. Bewegt nun der Benutzer die Hände 7 innerhalbe des Einlassbereichs 13 von der Position P1 zur Position P2 unterhalb des zweiten Auslasses 17', so wird dies von der Bildverarbeitungseinheit erkannt, woraufhin die Steuereinheit 3 das Ventil für die erste Flüssigkeit 11 sofort schliesst und das Ventil für die zweite Flüssigkeit 11' kurz aufmacht, um z.B. eine gewisse Menge an Seife oder Desinfektionsmittel zu dispensieren. Die zweite Flüssigkeit 11' kann beispielsweise auch über ein zweites Rohr mit dem zweiten Flüssigkeitsauslass 17', welches z.B. seitlich (und gegen hinten) versetzt angeordnet ist gegenüber dem Rohr für die erste Flüssigkeit 11, ausgegeben werden. Die Bildverarbeitungseinheit ist dabei in der Lage die Positionen P1 und P2 des Objekts 7 (z.B. Hände) zu bestimmen, und die Steuereinheit 3 führt in Abhängigkeit der jeweiligen Position P1, P2 des Objekts 7 (z.B. Hände) unterschiedliche Aktionen aus.

Soll ein bestimmtes (neues, bisher unbekanntes) Objekt erkannt werden, so können vom Benutzer entsprechende Bilder (oder Film bzw. Videos) als Trainings-Daten mit der Kamera der Armatur (oder mit einer anderen Kamera z.B. eines Smartphones) aufgenommen werden. Diese Daten können, wie bereits oben erwähnt, an einen Server übermittelt werden, welcher dann ein entsprechend trainiertes neuronales Netzwerk an die Armatur zurückliefert (z.B. in Form eines "TensorFlow Lite" Modells). Die Zuordnung von einem bestimmten Objekt (oder einer Geste betreffend dieses Objekt) zu einer bestimmten Aktion kann der Benutzer beispielsweise mittels einer Web-App oder einer App auf seinem Smartphone selbst vornehmen oder abändern.

Weitere Anwendungsgebiete der erfindungsgemässen Armatur sind beispielsweise in Getränkeautomaten oder automatischen Waschanlagen denkbar. Bei den Getränkeautomaten werden je nach erkanntem Behälter (gross, klein, transparent, von einer gewissen Farbe) verschiedene Getränke dispensiert, z.B. reines Wasser, Sprudelwasser, Tee, Kaffee, Suppe, etc.

Die vorgeschlagene Armatur kann sowohl im privaten Bereich wie auch in öffentlichen Sanitäranlagen eingesetzt werden, wobei für die Anwendung im privaten Bereich ein viel höherer Grad an Personalisierung sowie eine grössere Vielfalt an unterschiedlichen Aktionen möglich ist. Für den öffentlichen Bereich hat die vorgeschlagene Armatur aber auch den Vorteil, dass ein Monteur, Installateur oder Servicetechniker die Anlage ohne Bedienelement einfach über den eingebauten bildgebenden Sensor (z.B. Kamera) konfigurieren kann, und dazu kein spezielles Konfigurations-/Programmiergerät benötigt.

### LISTE DER BEZUGSZEICHEN

- 1: Armatur, Auslaufarmatur, Wasserhahn, Duscheinlaufarmatur
- 2: Sanitärinstallation, Waschbecken, Dusche
- 3: Steuereinheit, -prozessor
- 4: Sanitärelement, (Auslauf-)Rohr mit Ventil
- 5: bildgebender Sensor, (2D-/3D-)Kamera
- 6: Beleuchtungseinheit, Anzeige/Indikator
- 7: Objekt, Hände, Geschirr, Küchenutensilien, Kopf
- 8: Bildverarbeitungseinheit, -prozessor
- 9: Kommunikationseinheit, Sender-/Empfänger (Transceiver)
- 10: (Cloud-)Server
- 11, 11': Flüssigkeit (Wasser, Desinfektionsmittel, Seife)
- 12: Armaturenanordnung
- 13: Einlassbereich
- 14: Auslaufbereich
- 15: Benutzer
- 16: Ventil
- 17, 17': (Flüssigkeits-)Auslass
- P1, P2: Position

## Patentansprüche

1. Eine Armatur (1) für eine Sanitärinstallation (2), wie z.B. ein Waschbecken oder -trog, ein Bidet, eine Dusche, eine Badewanne, ein Seifenspender, ein Lotionsspender, ein Desinfektionsmittelspender, ein Händetrockner, ein Haartrockner, eine Toilette, ein Dusch-WC, ein Urinal, ein Getränkeautomat oder eine Waschanlage, umfassend eine Steuereinheit (3) und ein mit der Steuereinheit (3) steuerbares Sanitärelement (4), wobei die Armatur (1) mindestens einen bildgebenden Sensor (5) zum Erfassen einer Szene beim Sanitärelement (4) aufweist, wobei der mindestens eine bildgebende Sensor (5) insbesondere eine 2D- oder 3D-Kamera, eine Wärmebildkamera, ein Ultraschallsensor, ein Radarsensor oder ein Laserdistanzmesssensor, insbesondere ein LIDAR- oder ToF-Sensor oder ein Laserscanner, oder eine Kombination der genannten Sensortypen ist, und die Steuereinheit (3) dazu ausgebildet ist, in Abhängigkeit einer Objekterkennung zum Erkennen von mindestens einem Objekt (7) in der Szene, wie z.B. einer Hand eines Benutzers (15) der Armatur (1), eines Küchenutensils oder eines Putzutensils, basierend auf mindestens einem Ausgangssignal von dem mindestens einen bildgebenden Sensor (5) eine Aktion des Sanitärelements (4) auszulösen, wobei die Objekterkennung mittels eines neuronalen Netzes erfolgt, **dadurch gekennzeichnet, dass** das neuronale Netz ein selbstlernendes neuronales Netz ist, und dass die Armatur (1) dazu ausgebildet ist, eine Rückmeldung des Benutzers (15) an die Steuereinheit (3) entgegenzunehmen, mit welcher der Benutzer (15) angibt, ob die von der Steuereinheit (3) ausgelöste Aktion korrekt war oder nicht.

2. Die Armatur (1) gemäss Anspruch 1, **dadurch gekennzeichnet, dass** die Rückmeldung des Benutzers (15) von dem mindestens einen bildgebenden Sensor (5) aufnehmbar ist, wobei die Rückmeldung des Benutzers (15) insbesondere darin besteht, dass der Benutzer (15) den mindestens einen bildgebenden Sensor (5) für kurze Zeit mit der Hand abdeckt, wenn die ausgelöste Aktion falsch war.

3. Die Armatur (1) gemäss Anspruch 1 oder 2, **dadurch gekennzeichnet, dass** die Armatur (1) zusätzlich ein Mikrofon auf, mit welchem der Benutzer (15) insbesondere eine Rückmeldung an die Steuereinheit (3) geben kann, wobei die Steuereinheit (3) insbesondere dazu ausgeführt ist, basierend auf einem Ausgangssignal des Mikrofons Klatsch- und/oder Pfeifgeräusche zu erkennen.

4. Die Armatur (1) gemäss einem der Ansprüche 1 bis 3, **dadurch gekennzeichnet, dass** bestärkendes Lernen ausführbar ist.

5. Die Armatur (1) gemäss einem der Ansprüche 1 bis 4, **dadurch gekennzeichnet, dass** die Armatur (1) zusätzlich eine Bildverarbeitungseinheit (8) aufweist, wobei die Bildverarbeitungseinheit (8) dazu ausgebildet ist, die Objekterkennung mittels des neuronalen Netzes auszuführen.

6. Die Armatur (1) gemäss einem der Ansprüche 1 bis 4, **dadurch gekennzeichnet, dass** die Armatur (1) zusätzlich eine Kommunikationseinheit (9) aufweist, um das mindestens eine Ausgangssignal von dem mindestens einen bildgebenden Sensor (5) an eine entfernte Bildverarbeitungseinheit (8) der Armatur (1), z.B. ein Server, insbesondere in der Cloud (10), zur Objekterkennung zu senden und um ein Ergebnis der Objekterkennung zu empfangen, wobei die Bildverarbeitungseinheit (8) dazu ausgebildet ist, die Objekterkennung mittels des neuronalen Netzes auszuführen.

7. Die Armatur (1) gemäss einem der Ansprüche 1 bis 6, **dadurch gekennzeichnet, dass** das neuronale Netz vor Inbetriebnahme der Armatur (1) trainiert wurde.

8. Die Armatur (1) gemäss einem der Ansprüche 5 oder 6, **dadurch gekennzeichnet, dass** die Bildverarbeitungseinheit (8) dazu ausgebildet ist, als Teil der Objekterkennung eine Objektklassifikation durchzuführen, um das Objekt (7) zu einer bestimmten Klasse aus einer Vielzahl von vordefinierten Klassen zuzuordnen.

9. Die Armatur (1) gemäss Anspruch 8, **dadurch gekennzeichnet, dass** mittels der Objektklassifikation verschiedene Klassen von Küchenutensilien, wie z.B. Teller, Gläser, Tassen, Besteck, Kochtöpfe, Pfannen, etc., oder von Gliedmassen, wie z.B. Hände, Arme, Füsse oder Beine, des Benutzers (15) der Armatur oder von Putzutensilien, wie z.B. eine Putzbürste, einen Putzschwamm, Stahlwolle oder ein Putzlappen, erkannt werden können.

10. Die Armatur (1) gemäss einem der Ansprüche 5, 6, 8 und 9, **dadurch gekennzeichnet, dass** die Bildverarbeitungseinheit (8) dazu ausgebildet ist, mindestens eine Eigenschaft des Objekts (7), wie z.B. Transparenz, Farbe, Grösse oder Verschmutzungsgrad, zu bestimmen.

11. Die Armatur (1) gemäss einem der Ansprüche 5, 6, 8, 9 und 10, **dadurch gekennzeichnet, dass** die Bildverarbeitungseinheit (8) dazu ausgebildet ist, eine Position, insbesondere relativ zu einer Referenzposition, und/oder eine Bewegung des Objekts (7) zu bestimmen.

12. Die Armatur (1) gemäss einem der Ansprüche 8 bis 11, **dadurch gekennzeichnet, dass** die Steuereinheit (3) dazu ausgebildet ist, in Abhängigkeit der Objektklassifikation und/oder der Eigenschaft des Objekts (7) und/oder der Position des Objekts (7) und/oder der Bewegung des Objekts (7) eine bestimmte Aktion des Sanitärelements (4) auszulösen.

13. Die Armatur (1) gemäss Anspruch 12, **dadurch gekennzeichnet, dass** eine oder mehrere der folgenden Aktionen auslösbar sind:
- Auswählen einer Voreinstellung des Sanitärelements (4) und Ausführen eines gemäss der Voreinstellung definierten Verhaltens des Sanitärelements (4);
- Abgeben einer bestimmten Menge eines Fluids (11);
- Abgeben einer bestimmten Menge eines Fluids (11) pro Zeiteinheit;
- Abgeben eines Fluids (11) mit einer voreingestellten maximalen, minimalen oder bevorzugten Temperatur des abzugebenden Fluids (11);
- Abgeben eines bestimmten Fluids (11) aus einer Vielzahl verschiedener Fluide, insbesondere in Abhängigkeit einer Position des Objekts (7);
- Ein- und/oder Ausschalten der Abgabe eines Fluids (11).

14. Eine Armaturenanordnung (12) umfassend eine Sanitärinstallation (2) und eine Armatur (1) gemäss einem der Ansprüche 1 bis 13, wobei der bildgebende Sensor (5) derart angeordnet ist, dass ein Einlassbereich (13), insbesondere zum Abgeben eines Fluids (11), und/oder ein Auslaufbereich (14), insbesondere zum Wegführen des abgegebenen Fluids (11), der Armatur (1) durch den bildgebenden Sensor (5) erfassbar ist/sind.

15. Die Armaturenanordnung (12) gemäss Anspruch 14, wobei die Sanitärinstallation (2) ein Waschbecken oder -trog, ein Bidet, eine Dusche, eine Badewanne, ein Seifenspender, ein Lotionsspender, ein Desinfektionsmittelspender, ein Händetrockner, ein Haartrockner, eine Toilette, ein Dusch-WC, ein Urinal, ein Getränkeautomat oder eine Waschanlage ist.

16. Ein Verfahren zum Auslösen einer Aktion eines Sanitärelements (4) einer Armatur (1) gemäss einem der Ansprüche 1 bis 13, umfassend die Schritte:
- Erfassen einer Szene beim Sanitärelement (4) mit mindestens einem bildgebenden Sensor (5), insbesondere in einem Einlassbereich (13) und/oder einem Auslaufbereich (14) der Armatur (1), wobei die Szene mittels eines oder mehrerer Bilder als Ausgabe des mindestens einen bildgebenden Sensors (5) erfasst wird, wobei insbesondere im Fall mehrerer Bilder diese zeitlich gestaffelt, z.B. als Film bzw. Video, oder aus verschiedenen Blickwinkeln aufgenommen werden;
- Durchführen einer Objekterkennung zum Erkennen von mindestens einem Objekt (7) in der Szene, wie z.B. einer Hand eines Benutzers (15) der Armatur (1), eines Küchenutensils oder eines Putzutensils; und
- Auslösen einer Aktion des Sanitärelements (4) in Abhängigkeit der Objekterkennung,
wobei die Objekterkennung mittels eines neuronalen Netzes erfolgt, **dadurch gekennzeichnet, dass** das neuronale Netz ein selbstlernendes neuronales Netz ist, und dass der Benutzer (15) eine Rückmeldung gibt, ob die ausgelöste Aktion korrekt war oder nicht.

17. Das Verfahren nach Anspruch 16, zusätzlich umfassend mindestens einen der folgenden Schritte:
- Aufnehmen mit dem mindestens einen bildgebenden Sensor (5) oder einer separaten von der Armatur (1) unabhängigen Kamera, z.B. einer Kamera eines Smartphones, von Bildern eines neuen, bisher unbekannten Objekts (7);
- Übermitteln von Trainings-Daten, insbesondere die zuvor aufgenommenen Bilder eines neuen, bisher unbekannten Objekts (7), an einen Server (10), insbesondere mit einer Angabe betreffend die Objektklasse, welcher die Trainings-Daten zugeordnet sind;
- Verarbeiten von Trainings-Daten um ein trainiertes neuronales Netz zu erstellen, insbesondere in Form eines TensorFlow Lite Modells;
- Übermitteln eines trainierten neuronalen Netzes, insbesondere in Form eines TensorFlow Lite Modells, von dem Server (10) and die Armatur (1);
- Zuordnen von einem bestimmten Objekt (7) oder einer Geste betreffend dieses Objekt (7) zu einer bestimmten Aktion für die Steuereinheit (3), insbesondere durch den Benutzer (15), beispielsweise mittels einer Web-App oder einer Mobile App auf einem Smartphone.

## Claims

1. A tap (1) for a sanitary installation (2), such as for example a washbasin or washing trough, a bidet, a shower, a bathtub, a soap dispenser, a lotion dispenser, a disinfectant dispenser, a hand dryer, a hair dryer, a toilet, a washlet, a urinal, a beverage dispensing machine or a washing installation, comprising a control unit (3) and a sanitary element (4) controllable by the control unit (3), wherein the tap (1) has at least one imaging sensor (5) for detecting a scene at the sanitary element (4), wherein the at least one imaging sensor (5) is in particular a 2D or 3D camera, a thermal imaging camera, an ultrasonic sensor, a radar sensor or a laser distance measuring sensor, in particular a LIDAR or ToF sensor or a laser scanner, or a combination of the aforementioned sensor types, and wherein the control unit (3) is configured to trigger an action of the sanitary element (4) depending on an object recognition for recognizing at least one object (7) in the scene, such as for example a hand of a user (15) of the tap (1), a kitchen utensil or a cleaning utensil, based on at least one output signal from the at least one imaging sensor (5), wherein the object recognition is performed using a neuronal network, **characterized in that** the neuronal network is a self-learning neuronal network and **in that** the tap (1) is configured to receive a feedback from the user (15) to the control unit (3) with which the user (15) indicates whether the action triggered by the control unit (3) was correct or not.

2. The tap (1) according to claim 1, **characterised in that** the feedback of the user (15) is recordable by the at least one imaging sensor (5), wherein the feedback of the user (15) in particular consists in the user (15) covering the imaging sensor (5) with the hand for a short time if the triggered action was wrong.

3. The tap (1) according to claim 1 or 2, **characterised in that** the tap (1) further comprises a microphone, with which the user (15) may in particular give a feedback to the control unit (3), wherein the control unit (3) is in particular configured to recognize clapping and/or whistling noises based on the output signal of the microphone.

4. The tap (1) according to any one of claims 1 to 3, **characterized in that** reinforcement learning can be performed.

5. The tap (1) according to any one of claims 1 to 4, **characterised in that** the tap (1) further has an image processing unit (8), wherein the image processing unit (8) is configured to perform the object recognition by means of the neuronal network.

6. The tap (1) according to any one of claims 1 to 4, **characterised in that** the tap (1) further has a communication unit (9) for sending the at least one output signal from the at least one imaging sensor (5) to a remote image processing unit (8), e.g. a server, in particular in the cloud (10), for object recognition and to receive a result of the object recognition, wherein the image processing unit (8) is configured to perform the object recognition by means of the neuronal network.

7. The tap (1) according to any one of claims 1 to 6, **characterized in that** the neuronal network has been trained before commissioning of the tap (1).

8. The tap (1) according to one of claims 5 or 6, **characterised in that** the image processing unit (8) is configured to perform an object classification as part of the object recognition in order to assign the object (7) to a specific class from a plurality of predefined classes.

9. The tap (1) according to claim 8, **characterised in that**, by means of the object classification, different classes of kitchen utensils, such as for example plates, glasses, cups, cutlery, cooking pots, pans, etc., or of limbs, such as for example hands, arms, feet or legs of the user (15) of the tap, or of cleaning utensils, such as for example a cleaning brush, a cleaning sponge, steel wool or a cleaning cloth, can be recognised.

10. The tap (1) according to one of the claims 5, 6, 8 and 9, **characterised in that** the image processing unit (8) is configured to determine at least one property of the object (7), such as for example transparency, colour, size or degree of soiling.

11. The tap (1) according to one of the claims 5, 6, 8, 9 and 10, **characterised in that** the image processing unit (8) is configured to determine a position, in particular relative to a reference position, and/or a movement of the object (7).

12. The tap (1) according to any one of claims 8 to 11, **characterised in that** the control unit (3) is configured to trigger a specific action of the sanitary element (4) depending on the object classification and/or the property of the object (7) and/or the position of the object (7) and/or the movement of the object (7).

13. The tap (1) according to claim 12, **characterised in that** one or more of the following actions can be triggered:
- selecting a presetting of the sanitary element (4) and executing a behaviour of the sanitary element (4) defined according to the presetting;
- discharging a specific quantity of a fluid (11);
- discharging a specific quantity of a fluid (11) per unit of time;
- discharging a fluid (11) at a preset maximum, minimum or preferred temperature of the fluid (11) to be discharged;
- discharging a specific fluid (11) from a plurality of different fluids, in particular depending on a position of the object (7);
- switching the discharge of a fluid (11) on and/or off.

14. A tap arrangement (12) comprising a sanitary installation (2) and a tap (1) according to any one of claims 1 to 13, wherein the imaging sensor (5) is arranged such that an inlet area (13), in particular for discharging a fluid (11), and/or an outlet area (14), in particular for removing the discharged fluid (11), of the tap (1) can be detected by the imaging sensor (8).

15. The tap arrangement (12) according to claim 14, wherein the sanitary installation (2) comprises a washbasin or washing trough, a bidet, a shower, a bathtub, a soap dispenser, a lotion dispenser, a disinfectant dispenser, a hand dryer, a hair dryer, a toilet, a washlet, a urinal, a beverage dispensing machine or a washing installation.

16. A method for triggering an action of a sanitary element (4) of a tap (1) according to any of claims 1 to 13, comprising the steps:
- detecting a scene at the sanitary element (4) with at least one imaging sensor (5), in particular in an inlet area (13) and/or an outlet area (14) of the tap (1), wherein the scene is detected by means of one or more images as output of the at least one imaging sensor (8), wherein, in particular in the case of multiple images, these are staggered in time, e.g. as a film or video, or recorded from different angles;
- performing an object recognition to recognise at least one object (7) in the scene, such as for example a hand of a user (15) of the tap (1), a kitchen utensil or a cleaning utensil; and
- triggering an action of the sanitary element (4) depending on the object recognition,
wherein the object recognition is performed by means of a neuronal network, **characterized in that** the neuronal network is a self-learning neuronal network, and **in that** the user (15) provides a feedback as to whether the triggered action was correct or not.

17. The method according to claim 16, further comprising at least one of the following steps:
- recording images of a new, previously unknown object (7) with the at least one imaging sensor (5) or a camera separate from the tap (1), e.g. a camera of a smartphone;
- transmitting training data, in particular the previously recorded images of a new, previously unknown object (7), to a server (10), in particular with an indication of the object class to which the training data is assigned;
- processing training data to create a trained neural network, in particular in the form of a TensorFlow Lite model;
- transmitting a trained neural network, in particular in the form of a TensorFlow Lite model, from the server (10) to the tap (1);
- assigning a specific object (7) or a specific gesture relating to this object (7) to a specific action for the control unit (3), in particular by the user (15), for example by means of a web app or a mobile app on a smartphone.

## Revendications

1. Robinetterie (1) pour une installation sanitaire (2), par exemple un lavabo ou un évier, un bidet, une douche, une baignoire, un distributeur de savon, un distributeur de lotion, un distributeur de désinfectant, un sèche-mains, un sèche-cheveux, des toilettes, un WC-douche, un urinoir, un distributeur de boissons ou une machine à laver, comprenant une unité de commande (3) et un élément sanitaire (4) pouvant être commandé par l'unité de commande (3), dans laquelle la robinetterie (1) présente au moins un capteur d'imagerie (5) pour détecter une scène près de l'élément sanitaire (4), dans laquelle l'au moins un capteur d'imagerie (5) est en particulier une caméra 2D ou 3D, une caméra thermique, un capteur à ultrasons, un capteur radar ou un capteur de mesure de distance laser, en particulier un capteur LIDAR ou ToF ou un scanner laser, ou une combinaison des types de capteurs mentionnés, et l'unité de commande (3) est conçue pour reconnaître, en fonction d'une reconnaissance d'objet, au moins un objet (7) dans la scène, par exemple la main d'un utilisateur (15) de la robinetterie (1), un ustensile de cuisine ou un ustensile de voyage, et déclencher une action de l'élément sanitaire (4) sur la base d'au moins un signal de sortie de l'au moins un capteur d'imagerie (5), dans laquelle la reconnaissance d'objet est réalisée au moyen d'un réseau neuronal, **caractérisée en ce que** le réseau neuronal est un réseau neuronal à auto-apprentissage, et **en ce que** la robinetterie (1) est conçue pour recevoir un message de retour de l'utilisateur (15) à l'unité de commande (3), par lequel l'utilisateur (15) indique si l'action déclenchée par l'unité de commande (3) était correcte ou non.

2. Robinetterie (1) selon la revendication 1, **caractérisée en ce que** le message de retour de l'utilisateur (15) peut être enregistré par l'au moins un capteur d'imagerie (5), dans laquelle le message de retour de l'utilisateur (15) consiste en particulier à ce que l'utilisateur (15) recouvre de la main pendant une courte durée l'au moins un capteur d'imagerie (5) si l'action déclenchée était incorrecte.

3. Robinetterie (1) selon la revendication 1 ou 2, **caractérisée en ce que** la robinetterie (1) présente en outre un microphone avec lequel l'utilisateur (15) peut notamment envoyer un message de retour à l'unité de commande (3), dans laquelle l'unité de commande (3) est notamment conçue pour reconnaître des claquements et/ou des sifflements sur la base d'un signal du microphone.

4. Robinetterie (1) selon l'une des revendications 1 à 3, **caractérisée en ce que** l'apprentissage par renforcement est réalisable.

5. Robinetterie (1) selon l'une des revendications 1 à 4, **caractérisée en ce que** la robinetterie (1) présente en outre une unité de traitement d'images (8), dans laquelle l'unité de traitement d'images (8) est conçue pour réaliser la reconnaissance d'objet au moyen du réseau neuronal.

6. Robinetterie (1) selon l'une des revendications 1 à 4, **caractérisée en ce que** la robinetterie (1) présente en outre une unité de communication (9) pour envoyer l'au moins un signal de sortie de l'au moins un capteur d'imagerie (5) à une unité de traitement d'images (8) distante de la robinetterie (1), par exemple un serveur, en particulier sur le cloud (10), pour la reconnaissance d'objet et pour recevoir un résultat de la reconnaissance d'objet, dans laquelle l'unité de traitement d'images (8) est conçue pour réaliser la reconnaissance d'objet au moyen du réseau neuronal.

7. Robinetterie (1) selon l'une des revendications 1 à 6, **caractérisée en ce que** le réseau neuronal a été entraîné avant la mise en service de la robinetterie (1).

8. Robinetterie (1) selon la revendication 5 ou 6, **caractérisée en ce que** l'unité de traitement d'images (8) est conçue pour réaliser, en tant que partie intégrante de la reconnaissance d'objet, une classification d'objets afin d'affecter l'objet (7) à une classe déterminée parmi une pluralité de classes prédéfinies.

9. Robinetterie (1) selon la revendication 8, **caractérisée en ce que**, au moyen de la classification d'objet, différentes classes d'ustensiles de cuisine, par exemple des assiettes, des verres, des tasses, des couverts, des casseroles, des poêles, etc., ou de membres, par exemple des mains, des bras, des pieds ou des jambes de l'utilisateur (15) de la robinetterie, ou d'ustensiles de nettoyage, par exemple une brosse de nettoyage, une éponge de nettoyage, de la laine d'acier ou un chiffon de nettoyage, peuvent être détectées.

10. Robinetterie (1) selon l'une des revendications 5, 6, 8 et 9, **caractérisée en ce que** l'unité de traitement d'images (8) est conçue pour déterminer au moins une propriété de l'objet (7), par exemple la transparence, la couleur, la taille ou le degré de salissure.

11. Robinetterie (1) selon l'une des revendications 5, 6, 8, 9 et 10, **caractérisée en ce que** l'unité de traitement d'images (8) est conçue pour déterminer une position, en particulier par rapport à une position de référence, et/ou un mouvement de l'objet (7).

12. Robinetterie (1) selon l'une des revendications 8 à 11, **caractérisée en ce que** l'unité de commande (3) est conçue pour déclencher une action déterminée de l'élément sanitaire (4) en fonction de la classification de l'objet et/ou de la propriété de l'objet (7) et/ou du mouvement de l'objet (7).

13. Robinetterie (1) selon la revendication 12, **caractérisée en ce qu'**une ou plusieurs des actions suivantes peuvent être déclenchées :
- sélection d'un préréglage de l'élément sanitaire (4) et exécution d'un comportement de l'élément sanitaire (4) défini selon le préréglage ;
- distribution d'une certaine quantité de fluide (11) ;
- distribution d'une certaine quantité de fluide (11) par unité de temps ;
- distribution d'un fluide (11) à une température maximale, minimale ou préférentielle préréglée du fluide (11) à distribuer ;
- distribution d'un fluide déterminé (11) parmi une pluralité de fluides différents, notamment en fonction d'une position de l'objet (7) ;
- activation et/ou désactivation de la distribution d'un fluide (11).

14. Ensemble formant robinetterie (12) comprenant une installation sanitaire (2) et une robinetterie (1) selon l'une des revendications 1 à 13, dans lequel le capteur d'imagerie (5) est disposé de telle sorte qu'une zone d'entrée (13) de la robinetterie (1), en particulier pour distribuer un fluide (11), et/ou une zone de sortie (14) de la robinetterie (1), en particulier pour évacuer le fluide (11) distribué, peut/peuvent être détectée(s) par le capteur d'imagerie (5).

15. Ensemble formant robinetterie (12) selon la revendication 14, dans lequel l'installation sanitaire (2) est un lavabo ou un évier, un bidet, une douche, une baignoire, un distributeur de savon, un distributeur de lotion, un distributeur de désinfectant, un sèche-mains, un sèche-cheveux, des toilettes, un WC-douche, un urinoir, un distributeur de boissons ou une machine à laver.

16. Procédé de déclenchement d'une action d'un élément sanitaire (4) d'une robinetterie (1) selon l'une des revendications 1 à 13, comprenant les étapes suivantes :
- détection d'une scène au niveau de l'élément sanitaire (4) avec au moins un capteur d'imagerie (5), en particulier dans une zone d'entrée (13) et/ou une zone de sortie (14) de la robinetterie (1), dans lequel la scène est détectée au moyen d'une ou de plusieurs images en tant que sortie de l'au moins un capteur d'imagerie (5), dans lequel, en particulier dans le cas de plusieurs images, celles-ci sont enregistrées de manière échelonnée dans le temps, par exemple sous forme de film ou de vidéo, ou à partir de différents angles de vue ;
- réalisation d'une reconnaissance d'objet pour reconnaître au moins un objet (7) dans la scène, par exemple la main d'un utilisateur (15) de la robinetterie (1), un ustensile de cuisine ou un ustensile de ménage ; et
- déclenchement d'une action de l'élément sanitaire (4) en fonction de la détection de l'objet,
dans lequel la reconnaissance d'objet est réalisée au moyen d'un réseau neuronal, **caractérisé en ce que** le réseau neuronal est un réseau neuronal à auto-apprentissage, et **en ce que** l'utilisateur (15) donne un message de retour indiquant si l'action déclenchée était correcte ou non.

17. Procédé selon la revendication 16, comprenant en outre au moins une des étapes suivantes :
- enregistrement d'images d'un nouvel objet (7), jusqu'à présent inconnu, avec l'au moins un capteur d'imagerie (5) ou une caméra séparée, indépendante de la robinetterie (1), par exemple la caméra d'un smartphone ;
- transmission de données d'entraînement, en particulier des images précédemment enregistrées d'un nouvel objet (7) jusqu'à présent inconnu, à un serveur (10), en particulier avec une indication concernant la classe d'objet à laquelle les données d'entraînement sont associées ;
- traitement de données d'entraînement pour créer un réseau neuronal entraîné, en particulier sous la forme d'un modèle TensorFlow Lite ;
- transmission d'un réseau neuronal entraîné, en particulier sous la forme d'un modèle TensorFlow Lite, du serveur (10) à la robinetterie (1) ;
- attribution d'un objet (7) déterminé ou d'un geste concernant cet objet (7) à une action particulière pour l'unité de commande (3), notamment par l'utilisateur (15), par exemple au moyen d'une application web ou d'une application mobile sur un smartphone.
